# EUROPÄISCHE PATENTSCHRIFT

(11) **EP 1 764 621 B1**
(45) Veröffentlichungstag und Bekanntmachung des Hinweises auf die Patenterteilung: **24.11.2010**
(21) Anmeldenummer: 06019389.3
(22) Anmeldetag: 15.09.2006
(51) Int. Cl.: G01S 19/35

(54) **Navigationsgerät mit interner und externer Antenne**
Navigation device with an internal and an external antenna
Appareil de navigation avec une antenne intèrne et une antenne extèrne

(30) Priorität: 16.09.2005 DE 102005044497
(43) Veröffentlichungstag der Anmeldung: 21.03.2007
(73) Patentinhaber: BURY Sp. z o.o., 39-300 Mielec (PL)
(72) Erfinder: Piekarz, Roman, 39-300 Mielec (PL)
(74) Vertreter: Lins, Edgar

(56) Entgegenhaltungen:
- EP-A- 1 508 814
- JP-A- 2002 196 065
- US-A1- 2002 068 549
- US-A1- 2004 181 328
- US-A1- 2005 162 312

## Beschreibung

Die Erfindung betrifft ein Navigationsgerät mit einem Gehäuse, einer einen Teil des Geräts bildenden internen Antenne für Positionssignale, einer internen Umsetzungseinheit zur Auswertung und Umsetzung der empfangenen hochfrequenten Positionssignale in niederfrequente digitale Positionsangaben, einer zentralen Verarbeitungseinheit zur Verarbeitung der digitalen Positionsangaben, einem Eingang, über den eine externe Antenne anschließbar ist und mit einer Umschalteinrichtung zur Wirksamschaltung der internen Antenne oder der externen Antenne.

Derartige Navigationsgeräte sind bekannt. Aufgrund ihrer internen Antenne für die Positionssignale, insbesondere Satelliten-Positionssignale (in den derzeit aktuellen GPS- oder GLONASS-Systemen oder in künftigen Systemen, wie beispielsweise dem vorgesehen GALILEO-System) können die Navigationsgeräte autark betrieben werden. Demzufolge ist der Einsatz derartiger Navigationsgeräte auch in Kraftfahrzeugen, die nicht mit einer entsprechenden Satellitenantenne ausgestattet sind, oder außerhalb eines Kraftfahrzeugs, wie beispielsweise beim Fahrradfahren, Wandern usw., möglich. Bei dem autarken Einsatz des Navigationsgeräts im Kraftfahrzeug ist allerdings problematisch, dass aufgrund der Abschirmwirkung der metallischen Kraftfahrzeugkarosserie die Anordnung der internen Antenne, also des Geräts selbst, an einer Stelle erfolgen muss, die einerseits einen ausreichenden Empfang der hochfrequenten Satelliten-Positionssignale und andererseits eine gute Ablesbarkeit von Anzeigen auf einem regelmäßig vorhanden Display ermöglicht. Die hierfür bestehenden Kompromissmöglichkeiten erlauben regelmäßig keinen optimalen Empfang, sodass insbesondere in schwierigen Empfangslagen - durch Abschattungen usw - die erforderliche Aktualisierung der momentanen Position manchmal unterbleibt. Durch EP 1 508 814 A2 ist es daher bekannt, das Navigationsgerät mit einem Umschalter zu versehen, durch den entweder das Signal der internen Antenne oder das Signal der externen Antenne auf ein Hochfrequenzfilter zur weiteren Verarbeitung geleitet wird. Die Umschaltung erfolgt automatisch entsprechend den Empfangsverhältnissen für das GPS-Signal.

Es ist ferner bekannt, eine externe Satellitenantenne zu verwenden, die mit einer ebenfalls externen Umsetzungseinheit kombiniert ist, um die hochfrequenten Satelliten-Positions-Signale auszuwerten und in digitale Positionsangaben umzuwandeln. Diese Positionsangaben werden gemäß US 2004/0181328 A1 auf ein Auswertungsgerät übertragen, um beispielsweise die Annäherung eines Kraftfahrzeugs an eine abgespeicherte kritische Position (hier: installierte Überwachung des Fahrzeugs hinsichtlich Geschwindigkeit, Abstandseinhaltung o. ä.) festzustellen und mit einem Schaltcontroller Maßnahmen auszulösen, die eine Identifizierung des Fahrzeugs verhindern. Die verwendete Satellitenantenne mit der eigenen Umsetzungseinheit (für das GPS-System) wird auch als GPS-Maus bezeichnet.

In einer bekannten Technologie stehen in einem Navigationsgerät durch Auswertung und Umsetzung gebildete digitale Positionsangaben zur Verfügung, die durch die interne Satellitenantenne oder durch die externe Satellitenantenne empfangen worden sind. Die gebildeten digitalen Positionsangaben werden auf zwei Schnittstellen der zentralen Verarbeitungseinheit geleitet, wobei die zentrale Verarbeitungseinheit das Eingangssignal an der der externen Satellitenantenne zugeordneten Schnittstelle bevorzugt verarbeitet.

Durch US 2002/0068549 A1 ist es bekannt, GPS-Daten drahtlos von einem GPS-Empfänger auf ein Auswertungsgerät zu übertragen. Diese Übertragung findet allerdings mit Hochfrequenzsignalen statt.

Da für die digitalen Positionsangaben zwei Schnittstellen der zentralen Verarbeitungseinheit reserviert werden müssen, ist eine Standard-Verwendung dieser zentralen Verarbeitungseinheit, die auf den Empfang von digitalen Positionsangaben nur an einer Schnittstelle vorgesehen ist, nicht möglich.

Alternativ ist es grundsätzlich bekannt, hochfrequente Antennensignale, beispielsweise Rundfunksignale, mit einer zum Gerät gehörenden Antenne und einer vor einem Antenneneingang angeschlossenen externen Antenne zu empfangen. Dabei wird die Umschaltung so vorgenommen, dass das hochfrequente Signal der externen Antenne umgesetzt und verarbeitet wird, wenn ein Anschluss an dem Antenneneingang erfolgt ist. Hierbei entsteht das Problem, dass die Leitung der Hochfrequenzsignale zum Antenneneingang sehr sorgfältig erfolgen muss, wenn die externe Antenne, wie das häufig sinnvoll ist, mit einigem Abstand zum Gerät selbst angeordnet wird.

Der vorliegenden Erfindung liegt die Aufgabe zu Grunde, ein Navigationsgerät der eingangs erwähnten Art so auszubilden, dass es in vereinfachter Form mit einer zum Gerät gehörenden Antenne empfangene Positionssignale und bevorzugt von einer externen Empfangsantenne empfangene Positionssignale verarbeiten kann.

Zur Lösung dieser Aufgabe ist erfindungsgemäß ein Navigationsgerät der eingangs erwähnten Art dadurch gekennzeichnet, dass der Eingang als Dateneingang ausgebildet ist, an den die externe Empfangsantenne mit einer externen Umsetzungseinheit zur Generierung niederfrequenter digitaler Positionsangaben anschließbar ist, dass die zentrale Verarbeitungseinheit eine Navigations-Schnittstelle zum Empfang der niederfrequenten digitalen Positionsangaben aufweist und dass die Umschalteinrichtung der Verarbeitungseinheit vorgeschaltet und mit ihrem Ausgang mit der Navigations-Schnittstelle verbunden ist und von der internen Umsetzungseinheit auf den Dateneingang umschaltet, wenn über den Dateneingang extern gebildete digitale Positionsangaben in das Gerät gelangen.

Erfindungsgemäß kann somit die zentrale Verarbeitungseinheit gegenüber ihrer Standardverwendung unverändert bleiben, da die digitalen Positionsangaben nur in der einzigen Navigations-Schnittstelle auf die Verarbeitungseinheit gelangen. In der vorgeschalteten Umschalteinrichtung findet die Umschaltung für die bereits umgesetzten digitalen Positionsangaben statt, die üblicherweise als serielles Signal auf die Navigations-Schnittstelle geleitet werden. Dabei erfolgt die Umschaltung so, dass die über die externe Empfangsantenne, vorzugsweise Satelliten-Antenne, empfangenen und von der externen Umsetzungseinheit umgesetzten digitalen Positionsangaben bevorzugt verarbeitet werden, d.h. eine Unterdrückung der von der internen Empfangsantenne empfangenen Signale stattfindet, wenn die umgesetzten Eingangssignale der externen Empfangsantenne auf den Dateneingang des Navigationsgeräts gelangen.

In einer besonders bevorzugten Ausführungsform der Erfindung ist die Umschalteinrichtung als Teil einer Vorverarbeitungseinheit ausgebildet die auch die interne Umsetzungseinheit umfasst. Anders ausgedrückt ist die Umschalteinrichtung mit der internen Umsetzungseinheit zu einer gemeinsamen Verarbeitungsstufe (Vorverarbeitungseinheit) kombiniert.

Das erfindungsgemäße Navigationsgerät erlaubt somit den Anschluss einer sog. GPS-Maus, die in einem Kraftfahrzeug beispielsweise bevorzugt nahe der Heckscheibe oder sogar an der Außenseite des Kraftfahrzeugs, angebracht ist, während das Navigationsgerät im Sichtbereich des Fahrers des Fahrzeugs angeordnet werden muss, damit der Fahrer das Display des Navigationsgeräts ablesen kann. Die nicht unerhebliche Länge der Leitung zwischen der GPS-Maus und dem Navigationsgerät ist unkritisch, weil über diese Leitung niederfrequente Datensignale übertragen werden.

Ähnliches gilt im Übrigen auch dann, wenn die GPS-Maus eine drahtlose Datenübertragung (beispielsweise nach dem Bluetooth-Standard) ermöglicht und das Navigationsgerät einen entsprechenden Empfänger aufweist, der somit den Dateneingang bildet.

Die Erfindung soll im Folgenden anhand eines in dem beigefügten Blockschaltbild dargestellten Ausführungsbeispiels näher erläutert werden.

Das Navigationsgerät 1 ist in einem Gehäuse 2 untergebracht, in dem sich eine interne Satellitenantenne 3 als Empfangsantenne befindet.

In das Navigationsgerät 1 sind über (nicht dargestellte) Eingabeeinheiten Zieldaten eingebbar, die mit aktuellen Positionsdaten verglichen werden, um anhand einer gespeicherten (nicht dargestellten) digitalen Karte eine Route zu berechnen, die ggf. anhand vorgegebener Parameter optimiert ist. Diese Funktionen werden in einer zentralen Verarbeitungseinheit 4 ausgeführt, die über ein Interface 5 die Daten der Bedieneinheit und ggf. noch weitere relevante Daten, wie über Radioempfang erhaltene Verkehrsnachrichten, aktualisierte digitale Karten usw., erhält.

Die errechnete Route wird in Form von Fahranweisungen über einen Lautsprecher 6 und/oder ein Display 7 ausgegeben.

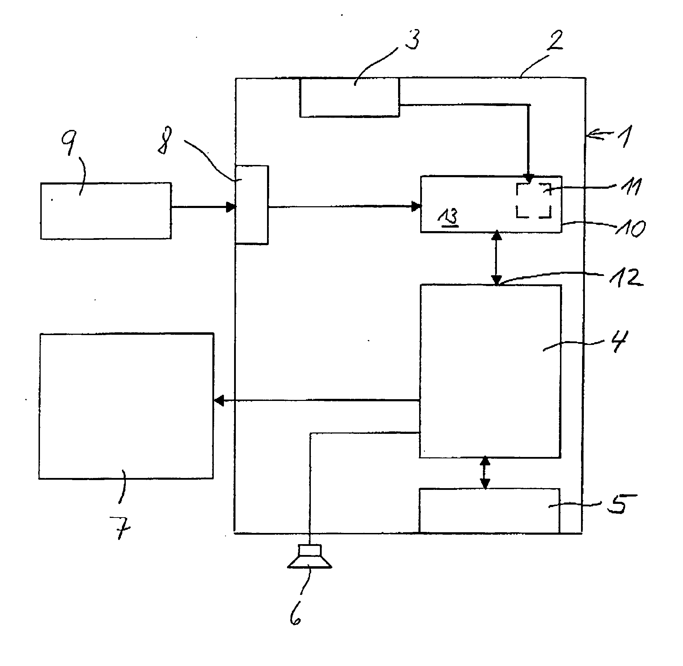

Es ist möglich, dass der Lautsprecher 6 und das Display 7 außerhalb des Navigationsgeräts 1 angeordnet sind, wie dies in der Zeichnung dargestellt ist. In diesem Fall können Lautsprecher 6 und Display 7 Teile einer Freisprecheinrichtung für ein Mobiltelefon sein. Es ist aber auch ebenso möglich, dass Lautsprecher 6 und Display 7 Teil des Navigationsgeräts 1 sind, um ein vollständig autarkes Navigationsgerät 1 zu ermöglichen.

Das Navigationsgerät 1 ist ferner mit einem Dateneingang 8 ausgerüstet, der vorzugsweise ein USB-Eingang sein kann. Über den Dateneingang 8 können beispielsweise serielle digitale Positionsangaben in das Navigationsgerät 1 eingespeist werden, die Ausgangssignale einer GPS-Maus 9 sind, also eines Geräts, das die Funktion einer externen Satellitenantenne und einer externen Umsetzungseinheit miteinander kombiniert.

Ist eine GPS-Maus 9 nicht an den Dateneingang 8 angeschlossen und werden somit keine digitalen Positionsangaben empfangen, verarbeitet das Navigationsgerät 1 Empfangssignale der internen Satellitenantenne 3, die in einer einen Teil einer erfindungsgemäß vorgesehenen Vorverarbeitungseinheit 10 bildenden internen Umsetzungseinheit 11 ausgewertet und in digitale (serielle) Positionsangaben umgesetzt werden. Diese Positionsangaben gelangen auf eine Schnittstelle 12 der zentralen Verarbeitungseinheit 4 als Angaben über die aktuelle Position des Navigationsgeräts 1.

Ist hingegen eine GPS-Maus 9 über den Dateneingang 8 an das Navigationsgerät 1 angeschlossen und werden somit serielle digitale Positionsangaben empfangen, bewirkt eine Umschalteinrichtung 13 in der Vorverarbeitungsstufe 10, dass nunmehr die empfangenen digitalen Positionsangaben der externen GPS-Maus 9 auf die serielle Schnittstelle 12 der zentralen Verarbeitungseinheit 4 gelangen, sodass die von der internen Satellitenantenne 3 empfangenen Positionssignale in der Vorverarbeitungseinheit 10 unterdrückt werden.

Die Umschaltung durch die Umschalteinrichtung 13 erfolgt somit im Bereich der niederfrequenten digitalen Positionsangaben. Die Umschalteinrichtung 13 ermöglicht somit die Standardverwendung der zentralen Verarbeitungseinheit 4, der digitale Positionsangaben nur über eine einzige Schnittstelle 12 zugeführt werden, obwohl zwei potentielle Quellen 9; 3, 11 für diese digitalen Positionsangaben existieren.

Der Dateneingang 8 ist in dem dargestellten Ausführungsbeispiel als USB-Eingang ausgebildet. Er kann in jeder anderen geeigneten Form realisiert sein, insbesondere auch als Empfänger drahtlos übertragener (serieller) Datensignale, insbesondere nach dem Bluetooth-Standard.

## Patentansprüche

1. Navigationsgerät (1) mit einem Gehäuse (2), einer einen Teil des Geräts (1) bildenden internen Antenne (3) für Positionssignale, einer internen Umsetzungseinheit (11) zur Auswertung und Umsetzung der empfangenen hochfrequenten Positionssignale in niederfrequente digitale Positionsangaben, einer zentralen Verarbeitungseinheit (4) zur Verarbeitung der digitalen Positionsangaben, einem Eingang, über den eine externe Antenne (in 9) anschließbar ist und mit einer Umschalteinrichtung (13) zur Wirksamschaltung der internen Antenne (3) oder der externen Antenne (in 9), **dadurch gekennzeichnet, dass** der Eingang als Dateneingang (8) ausgebildet ist, an den die externe Empfangsantenne (in 9) mit einer externen Umsetzungseinheit (in 9) zur Generierung niederfrequenter digitaler Positionsangaben anschließbar ist, dass die zentrale Verarbeitungseinheit (4) eine Navigations-Schnittstelle (12) zum Empfang der niederfrequenten digitalen Positionsangaben aufweist und dass die Umschalteinrichtung (13) der Verarbeitungseinheit (4) vorgeschaltet und mit ihrem Ausgang mit der Navigations-Schnittstelle (12) verbunden ist und von der internen Umsetzungseinheit (11) auf den Dateneingang (8) umschaltet, wenn über den Dateneingang (8) extern gebildete digitale Positionsangaben in das Gerät (1) gelangen.

2. Navigationsgerät nach Anspruch 1, **dadurch gekennzeichnet, dass** die Umschalteinrichtung (13) als Teil einer die interne Umsetzungseinheit (11) umfassenden Vorverarbeitungseinheit (10) ausgebildet ist.

3. Navigationsgerät nach Anspruch 1 oder 2, **dadurch gekennzeichnet, dass** der Dateneingang (8) durch einen drahtlosen Empfänger für Datensignale gebildet ist.

## Claims

1. Navigation device (1) with a housing (2), an internal antenna (3), forming a part of the device (1), for position signals, an internal conversion unit (11) for evaluating and converting the received radiofrequency position signals into low-frequency digital position information, a central processing unit (4) for processing the digital position information, an input via which an external antenna (in 9) can be connected, and with a switching device (13) for activating the internal antenna (3) or the external antenna (in 9), **characterized in that** the input is in the form of a data input (8) to which the external receiving antenna (in 9) with an external conversion unit (in 9) for generating low-frequency digital position information can be connected, **in that** the central processing unit (4) has a navigation interface (12) for receiving the low-frequency digital position information and **in that** the processing unit (4) is preceded by the switching device (13) and the output of said switching device (13) is connected to the navigation interface (12) and said switching device (13) switches from the internal conversion unit (11) to the data input (8) when externally formed digital position information reaches the device (1) via the data input (8).

2. Navigation device according to Claim 1, **characterized in that** the switching device (13) is constructed as part of a preprocessing unit (10) comprising the internal conversion unit (11).

3. Navigation device according to Claim 1 or 2, **characterized in that** the data input (8) is formed by a wireless receiver for data signals.

## Revendications

1. Appareil de navigation (1) comprenant un boîtier (2), une antenne interne (3) pour des signaux de position, formant une partie de l'appareil (1), une unité de conversion (11) interne pour extraire et convertir les signaux de position à haute fréquence reçus en indications de position numériques à basse fréquence, une unité de traitement (4) centrale pour le traitement des indications de position, une entrée par l'intermédiaire de laquelle une antenne externe (9) peut être raccordée, et comprenant un dispositif de commutation (13) pour l'activation de l'antenne interne (3) ou de l'antenne externe (dans 9), **caractérisé en ce que** l'entrée est formée par une entrée de données (8) à laquelle peut être raccordée l'antenne de réception externe (dans 9) ayant une unité de conversion (dans 9) externe pour générer des indications de position numériques à basse fréquence, **en ce que** l'unité de traitement (4) centrale présente une interface de navigation (12) pour recevoir les indications de position numériques à basse fréquence, et **en ce que** le dispositif de commutation (13) est monté en amont de l'unité de traitement (4) et relié par sa sortie à l'interface de navigation (12) et commute de l'unité de conversion (11) à l'entrée de données (8) lorsque des indications de position numériques formées extérieurement accèdent à l'appareil (1) par l'intermédiaire de l'entrée de données (8).

2. Appareil de navigation selon la revendication 1, **caractérisé en ce que** le dispositif de commutation (13) est formé en tant que partie d'une unité de prétraitement (10) comportant l'unité de conversion (11) interne.

3. Appareil de navigation selon la revendication 1 ou 2, **caractérisé en ce que** l'entrée de données (8) est formée par un récepteur sans fil pour des signaux de données.
